# EUROPÄISCHE PATENTANMELDUNG

(11) **EP 0 972 989 A1**
(43) Veröffentlichungstag der Anmeldung: **19.01.2000**
(21) Anmeldenummer: 98810675.3
(22) Anmeldetag: 15.07.1998
(51) Int. Cl.: F23L 1/02, F23H 3/02, F23L 15/00, F23L 9/00

(54) **Verfahren zur Verbrennung von Feststoffen**

(71) Anmelder: Asea Brown Boveri AG, 5401 Baden (CH)
(72) Erfinder: Pfiffner, Othmar, 8400 Winterthur (CH); Rüegg, Hans, 5610 Wohlen (CH); Serck-Hanssen, Peter, 8049 Zürich (CH); Ziegler, Georg, 8404 Winterthur (CH)
(74) Vertreter: Pöpper, Evamaria, Dr.

(57) **Zusammenfassung**

Die Erfindung betrifft ein Verfahren zur Verbrennung von Feststoffen, insbesondere Abfall (9), auf einem in mehrere Zonen (8-1, 8-2...) unterteilten, im wesentlichen aus in Reihen angeordneten Rostbelageinheiten (10) bestehenden Verbrennungsrost (8), wobei ein Verbrennungsgas (4) unterhalb der Zonen (8-1, 8-2 ...) bereitgestellt und anschliessend durch Öffnungen (22) in/zwischen den Rostbelageinheiten (10) in einen darüberliegenden Verbrennungsraum (5) geführt wird, und wobei zumindestens ein Teil der Rostbelageinheiten (10) mittels eines gasförmigen Kühlmediums (1), welches eine Kühlstrecke (3-1, 3-2...) durchströmt, zwangsgekühlt werden. Sie ist dadurch gekennzeichnet, dass eine Entkopplung des Mengenstroms des gasförmigen Kühlmediums (1) einer Rostzone (8-1, 8-2...) vom Mengenstrom des Verbrennungsgases (4) genau dieser Zone (8-1, 8-2...) durchgeführt wird.

## Beschreibung

### Technisches Gebiet

Die Erfindung betrifft ein Verfahren zur Verbrennung von Feststoffen, insbesondere Abfällen wie Haus- und Stadtmüll, auf einem in mehrere Zonen unterteilten Verbrennungsrost, welcher im wesentlichen aus in Reihen angeordneten Rostbelageinheiten besteht, die mit einem gasförmigen Medium gekühlt werden.

### Stand der Technik

Es ist bekannter Stand der Technik, stückige Feststoffe, wie z. B. Abfall, in einer Brennkammer, in der Primärluft zugegeben wird, und einer nachgeschalteten Nachbrennkammer, in der Sekundärluft zugegeben wird, zu verbrennen. Üblicherweise wird der Feststoff dabei auf einem Verbrennungsrost umgesetzt.

Bei luftgekühlten Verbrennungsrosten wird die Primärluft unter dem Rost zugeführt und strömt von den Unterwindzonen durch Öffnungen im Rostbelag in das darüberliegende Feststoffbett. Der Rostbelag wird dadurch gekühlt (Thomé-Kozmiensky, K. J.: Thermische Abfallbehandlung, EF-Verlag für Energie- und Umwelttechnik GmbH, 2. Auflage 1994, S. 157). Die Verbrennungsluft wird somit zuerst zur Kühlung genutzt und anschliessend zur Verbrennung. Der Mengenstrom an Kühlluft und Primärluft ist somit bei den bekannten luftgekühlten Rosten für jede Zone annähernd gleich gross. Mit der Verknüpfung der Verbrennungsluft und der Kühlluft müssen Kompromisse zwischen Feuerführung und Kühlung eingegangen werden, die den Einsatzbereich des Rostes begrenzen.

Ein weiterer Nachteil der bekannten luftgekühlten Roste besteht darin, dass die Verbrennungsluftkanäle/schlitze leicht verstopfen, weil sie in direktem Kontakt mit dem brennenden Müll stehen. Eine solche Verstopfung blockiert dann auch die Kühlluft, so dass die Kühlung versagt.

Neben den luftgekühlten Verbrennungsrosten sind auch wassergekühlte Verbrennungsroste mit einem von der Primärluft getrennten Kühlwassersystem bekannt (EP 0 621 449 B1, EP 0 757 206, DE 44 00 992 C1).

Wassergekühlte Verbrennungsroste haben gegenüber den bekannten luftgekühlten Verbrennungsrosten den Vorteil, dass die Kühlung unabhängig von der Verbrennungsluftzuteilung zu den einzelnen Zonen ist, sie haben aber gegenüber luftgekühlten Verbrennungsrosten technische Nachteile, weil das Wasser zum Sieden kommen kann oder Wasserleckagen entstehen können. Um die Kühlung bei einem eventuellen Ausfall des Kühlkreislaufes sicherzustellen, muss zusätzlich eine Notkühlung vorgesehen werden. Der Kühlkreislauf sowie die Notkühlung verursachen zusätzliche Investionskosten. Zudem erfordert der Wasserkühlkreislauf eine Wartung, wie Korrosionsschutz, Frostschutz und Konservierung bei längeren Stillstandszeiten.

Weiterhin wird durch die Wasserkühlung Wärme aus dem Feuerraum entzogen und somit der Wirkungsgrad der Feuerung reduziert. Die Rückgewinnung der Wärme aus dem Kühlwasser ist sehr aufwendig. Ausserdem kann es nachteilig vorkommen, dass der wassergekühlte Rost die vorgewärmte Verbrennungsluft unerwünschterweise abkühlt.

### Darstellung der Erfindung

Die Erfindung versucht, diese Nachteile zu vermeiden. Ihr liegt die Aufgabe zugrunde, ein Verfahren zur Verbrennung von Feststoffen, insbesondere Abfällen, zu entwickeln, bei welchem die Feststoffe auf einem aus im wesentlichen aus in Reihen angeordneten Rostbelageinheiten, welche mittels eines gasförmigen Kühlmediums gekühlt werden, bestehenden Verbrennungsrost verbrannt werden, und mit dem eine einfache Kühlung sichergestellt wird, ohne dass Grenzen bei der Feuerführung gesetzt werden. Ausserdem soll die Kühlung nicht beeinträchtigt werden, falls eine Öffnung für die Zufuhr von Verbrennungsluft verstopfen sollte, und Wärmeverluste sollen minimiert werden.

Erfindungsgemäss wird dies bei einem Verfahren gemäss Oberbegriff des Patentanspruches 1 dadurch erreicht, dass eine Entkopplung des Mengenstroms des gasförmigen Kühlmediums einer Rostzone vom Mengenstrom des Verbrennungsgases genau dieser Zone durchgeführt wird. Dadurch können unabhängig voneinander der Verbrennungvorgang und die Kühlung optimiert werden.

Die Vorteile der Erfindung bestehen darin, dass das Verfahren gegenüber den bekannten Verfahren mit einem wassergekühlten Verbrennungsrost wesentlich kostengünstiger ist, da Notkühlung, Wärmerückgewinnungswärmetauscher, Druckabsicherung, Wasseraufbereitung, Wasserreservetank und Wasserumwälzkreislauf entfallen, kein Einfrieren, Entleeren und Entlüften der Anlage notwendig sind und bei einer Leckage im Kühlkreislauf dieser nicht mehr abgestellt werden muss.

Gegenüber der bisherigen Rostkühlung mittels austretender Verbrennungsluft ergeben sich die folgenden Vorteile:
- Die Verbrennungsgasmenge für eine Rostzone kann unabhängig von der anfallenden Wärme in genau dieser Zone gewählt werden.
- Die Kühlmediummenge einer Zone kann in Abhängigkeit von der anfallenden Wärme eingestellt werden.
- Die Kühlung einer Zone ist unabhängig von einer eventuellen Verbrennungsgas-Vorwärmung.
- Die Kühlung erfolgt mit einem sauberen gasförmigen Kühlmedium, da die Luft nicht vom Rostdurchfall in der Unterwindzone verschmutzt wird.
- Ein Verstopfen der Austrittsöffnungen für das Verbrennungsgas in den Verbrennungsraum beeinträchtigt nicht die Kühlung der Roststäbe/Rostplatten.

Es ist besonders zweckmässig, wenn in mindestens einer der Zonen des Verbrennungsrostes ein grösserer Mengenstrom des Kühlmediums eingebracht wird als der Mengenstrom des Verbrennungsgases genau dieser Zone. Dadurch kann eine ausreichende Kühlwirkung auch bei der Verbrennung von Abfällen mit hohem Heizwert sichergestellt werden.

Von Vorteil ist, wenn das Kühlmedium über eine Leitung direkt der Kühlstrecke zugeführt wird, nach Durchlaufen der Kühlstrecke zunächst über spezielle Abfuhrleitungen einer Verbrennungsgaszufuhrleitung zugeführt wird, anschliessend das Gemisch beider Medien in eine Unterwindzone strömt und und von dort aus als eigentliches Verbrennungsgas in den Verbrennungsraum strömt. Mit dieser Schaltung wird die Regelung der Kühlluftverteilung und die Regelung der Verbrennnungsluftmengen der einzelnen Zonen vereinfacht. Zudem kann mit sauberer Luft gekühlt werden, weil die Luft keinen Staub von der Unterwindzone mitreisst.

Weiterhin ist es zweckmässig, wenn das Kühlmedium über eine Leitung der Kühlstrecke zugeführt wird, nach Durchlaufen der Kühlstrecke direkt in eine darunterliegende Unterwindzone eingebracht wird, und die Menge des für diese Zone benötigten Verbrennungsgases durch Zufuhr von zusätzlichem Verbrennungsgas in die Unterwindzone oder durch Abfuhr von gasförmigem Medium aus der Unterwindzone eingestellt wird. Dadurch können gegenüber der vorher genannten Variante Leitungen/Schläuche eingespart werden.

Es ist ausserdem zweckmässig, wenn das Kühlmedium über eine Leitung direkt einer Unterwindzone zugeführt wird, aus der Unterwindzone heraus der Kühlstrecke zugeführt wird, nach Durchlaufen der Kühlstrecke zunächst über Leitungen einer Verbrennungsgaszufuhrleitung zugeführt wird, deren Abzweigungen zu den Öffnungen in/zwischen den Rostbelageinheiten führen, durch welche das Gemisch beider Medien als eigentliches Verbrennungsgas in den Verbrennungsraum eingebracht wird.

Weiterhin ist es möglich, dass das Kühlmedium über eine Leitung der Kühlstrecke zugeführt wird, nach Durchlaufen der Kühlstrecke direkt in eine darunterliegende Unterwindzone strömt, aus der Unterwindzone über eine Leitung einer Verbrennungsgaszufuhrleitung zugeführt wird, deren Abzweigungen zu den Öffnungen in/zwischen den Rostbelageinheiten führen, durch welche das Gemisch beider Medien als eigentliches Verbrennungsgas in den Verbrennungsraum eingebracht wird. Der Vorteil dieser Variante besteht darin, dass das Verbrennungsgas für jede Reihe des Verbrennungsrostes individuell dosiert zugeführt werden kann und somit bessere Möglichkeiten zur Optimierung der Feuerung bestehen.

Ausserdem ist es zweckmässig, das Verbrennungsgas für jede Reihe des Verbrennungsrostes individuell dosiert zuzuführen, weil damit eine optimale Verbrennung des Abfalles ermöglicht wird.

Es ist weiterhin zweckmässig, wenn die Menge des gasförmigen Kühlmediums, welches den Kühlstrecken der jeweiligen Rostzonen zugeführt wird, so geregelt wird, dass die Austrittstemperatur des Kühlmediums nach Durchlaufen der Kühlstrecke weniger als +/- 100°C von der mittleren Temperatur aller Kühlluftstrecken abweicht. Das hat den Vorteil, dass die Kühlluftmenge minimalisiert wird und damit auch die dafür notwendige Antriebsleistung.

Weiterhin ist es vorteilhaft, wenn als Kühlmedium Luft verwendet wird mit einem Druck von mindestens Atmosphärendruck bis max. 2 bar Überdruck. Infolge des Überdruckes im Kühlsystem wird gewährleistet, dass kein Rauchgas durchdrückt.

Weitere vorteilhafte Ausgestaltungen des Verfahrens, die sich auf die verschiedenen Zu- und Abfuhrmöglichkeiten des Kühlmediums bzw. auf die Entnahme von Sekundärluft zur vollständigen Verbrennung des Materials beziehen, sind in den Unteransprüchen 10 bis 14 enthalten.

### Kurze Beschreibung der Zeichnung

In der Zeichnung sind mehrere Ausführungsbeispiele der Erfindung dargestellt. Es zeigen:
- Fig. 1: eine schematische Darstellung des Kühlluft/Verbrennungsluft-Weges bei einem luftgekühlten Verbrennungsrost gemäss bekanntem Stand der Technik;
- Fig. 2: eine schematische Darstellung des Kühlluft/Verbrennungsluft-Weges gemäss dem Hauptprinzip der Erfindung in zwei Varianten;
- Fig. 3: eine schematische Darstellung des Kühlluft/Verbrennungsluft-Weges in einer ersten Ausführungsvariante der Erfindung;
- Fig. 4: eine schematische Darstellung des Kühlluft/Verbrennungsluft-Weges in einer zweiten Ausführungsvariante der Erfindung;
- Fig. 5: eine schematische Darstellung des Kühlluft/Verbrennungsluft-Weges in einer dritten Ausführungsvariante der Erfindung;
- Fig. 6: eine schematische Darstellung des Kühlluft/Verbrennungsluft-Weges in einer vierten Ausführungsvariante der Erfindung;
- Fig. 7: eine schematische Darstellung des Kühlluft/Verbrennungsluft-Weges in einer fünften Ausführungsvariante der Erfindung;
- Fig. 8: eine schematische Darstellung des Kühlluft/Verbrennungsluft-Weges in einer sechsten Ausführungsvariante der Erfindung;
- Fig. 9: eine mögliche Ausführung für die Realisierung des Kühlluft/Verbrennungsluft-Weges gemäss Fig. 4;
- Fig. 10: eine mögliche Ausführung für die Realisierung des Kühlluft/Verbrennungsluft-Weges gemäss Fig. 7;
- Fig. 11: eine weitere mögliche Ausführungsform der Erfindung;
- Fig. 12: eine letzte Ausführungsform der Erfindung, bei welcher eine individuelle Verbrennungsluftzufuhr pro Reihe des Rostes vorgesehen ist.

Es sind nur die für das Verständnis der Erfindung wesentlichen Elemente gezeigt. Die Strömungsrichtung der Medien ist mit Pfeilen bezeichnet.

### Weg zur Ausführung der Erfindung

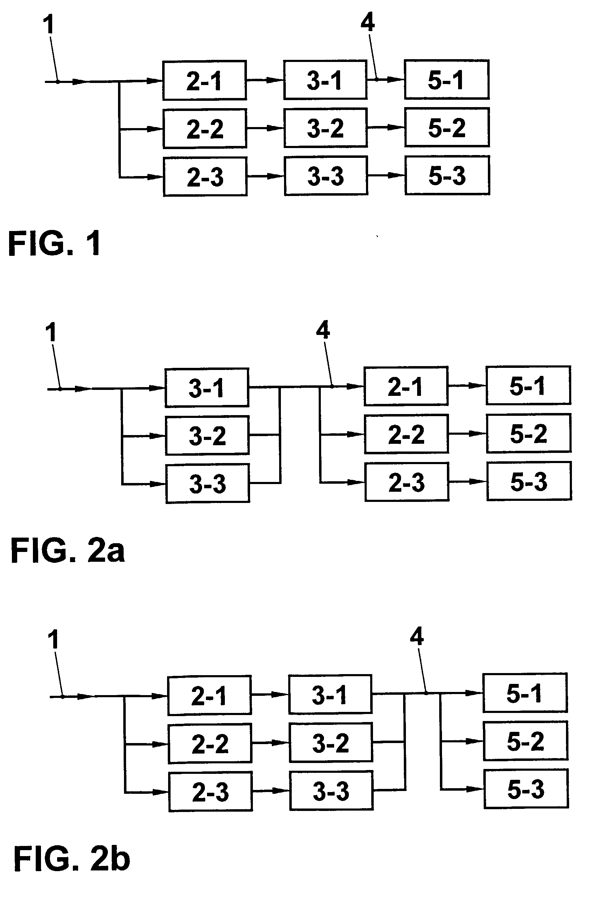

Nachfolgend wird die Erfindung anhand von Ausführungsbeispielen und der Fig. 1 bis 12 näher erläutert.

Fig. 1 zeigt zunächst schematisch den Verlauf des Kühlluft/Verbrennungsluft-Weges bei einem luftgekühlten Verbrennnungsrost zur Verbrennung von Müll nach dem bekannten Stand der Technik, um die Unterschiede der Erfindung besser sichtbar zu machen.

Ein gasförmiges Kühlmedium 1, in diesem Falle Luft, wird zunächst verschiedenen Unterwindzonen 2, von denen im Beispielsfalle drei Unterwindzonen 2-1, 2-2 und 2-3 gezeigt sind, zugeführt. Die Unterwindzonen 2 befinden sich dabei unterhalb verschiedener Zonen des Verbrennnungsrostbelages, was allerdings in dem Schema gemäss Fig. 1 nicht dargestellt ist. Die Luft 1 strömt nun aus den Unterwindzonen 2-1, 2-2 und 2-3 in den jeweils darüber angeordneten, mit bestimmten Kühlstrecken 3-1, 3-2 und 3-3 versehenen Rostbelag. Die Kühlstrecken 3 können dabei z. B. Labyrinthsysteme innnerhalb des Rostbelages sein oder einfache Öffnungen/Schlitze durch den Rostbelag, durch die die Kühlluft 1 strömt und somit den Rostbelag kühlt. Anschliessend gelangt die nunmehr vorgewärmte Kühlluft als Verbrennungsluft 4 (Primärluft) in die entsprechenden Zonen 5-1, 5-2 und 5-3 des Verbrennungsraumes 5. Bei dieser Lösung nach dem Stand der Technik sind also die Verbrennungsluft und die Kühlluft (Menge, Temperatur) für die jeweiligen Zonen miteinander verknüpft, d. h. die Mengeströme sind etwa gleich gross, so dass bei diesem Verfahren stets Kompromisse zwischen Feuerführung und Kühlung eingegangen werden müssen, denn Veränderungen bei der Kühlung rufen unweigerlich Veränderungen bei der Verbrennung hervor und umgekehrt.

Die beiden Fig. 2a und 2b zeigen schematisch den Verlauf des Kühlluft/Verbrennungsluft-Weges bei einem luftgekühlten Verbrennungsrost für die Verbrennung von Müll gemäss der Erfindung.

In Fig. 2a ist dargestellt, dass gasförmiges Kühlmedium 1, hier Kühlluft, zunächst den jeweiligen Kühlstrecken 3-1, 3-2 und 3-3 des Rostbelages zugeteilt und durch die Kühlstrecken 3-1, 3-2 und 3-3 geleitet wird, wodurch der Belag gekühlt wird. Nach dem Durchströmen der Kühlstrecken 3-1, 3-2 und 3-3 wird die erwärmte Kühlluft der einzelnen Kühlstrecken 3-1, 3-2 und 3-3 wieder in einer Leitung zusammengeführt und erst anschliessend gegebenenfalls mit zusätzlicher Verbrennungsluft 4 für die einzelnen Unterwindzonen 2-1, 2-2 und 2-4 unterhalb des Verbrennungsrostbelages aufgeteilt, dorthin geleitet und von dort aus durch Öffnungen im Rostbelag ohne eine wesentliche Kühlwirkung auf den Rostbelag in die Verbrennungsraumzonen 5-1, 5-2 und 5-3 gebracht.

Fig. 2b zeigt einen anderen möglichen Verlauf des Kühlluft/Verbrennungsluft-Weges gemäss der vorliegenden Erfindung. Das gasförmige Kühlmedium 1, z. B. Luft, wird hier, wie beim bekannten Stand der Technik, zunächst den Unterwindzonen 2-1, 2-2 und 2-3 zugeführt und von dort aus zur Kühlung des darüber liegenden Rostbelages verwendet, indem es die Kühlstrecken 3-1, 3-2 und 3-3 durchströmt. Nach dem Kühlvorgang wird dann das Kühlmedium 1 im Gegensatz zum bekannten Stand der Technik nicht sofort als Primärverbrennungsluft benutzt, sondern es wird aus den einzelnen Rostbereichen abgeführt, in eine Verbrennungsluftleitung eingebracht und anschliessend je nach Anforderung mengenstrommässig aufgeteilt in die Verbrennungsraumzonen 5-1, 5-2 und 5-3 eingebracht.

Bei der erfindungsgemässen Lösung sind also die Verbrennungsluft 4 und die Kühlluft 1 voneinander entkoppelt. Dadurch wird erreicht, dass die Kühlluft 1 (Menge, Temperatur) einer beliebigen Zone unabhängig von der Verbrennungsluft 4 (Menge, Temperatur) ist, die für diese Zone benötigt wird, d. h. die Kühlluftmenge kann in Abhängigkeit von der anfallenden Wärme eingestellt werden. Somit wird die Kühlung in ihrer Wirkung optimiert. Hinzu kommt, dass die Kühlung mit sauberer Luft erfolgt, da bei dem erfindungsgemässen Verfahren gemäss Fig. 2a keine Luft aus der Unterwindzone 2, die wegen des Rostdurchfalles stark staubhaltig ist, verwendet wird. Schliesslich wird die Kühlung nicht beeinträchtigt, wenn Austrittsöffnungen/Schlitze im Rostbelag für die Verbrennungsluft verstopft sein sollten.

Andererseits kann die Verbrennungsluftmenge für eine bestimmte Zone des Verbrennungsraumes 5 unabhängig von der anfallenden Wärme bei dieser Zone gewählt werden.

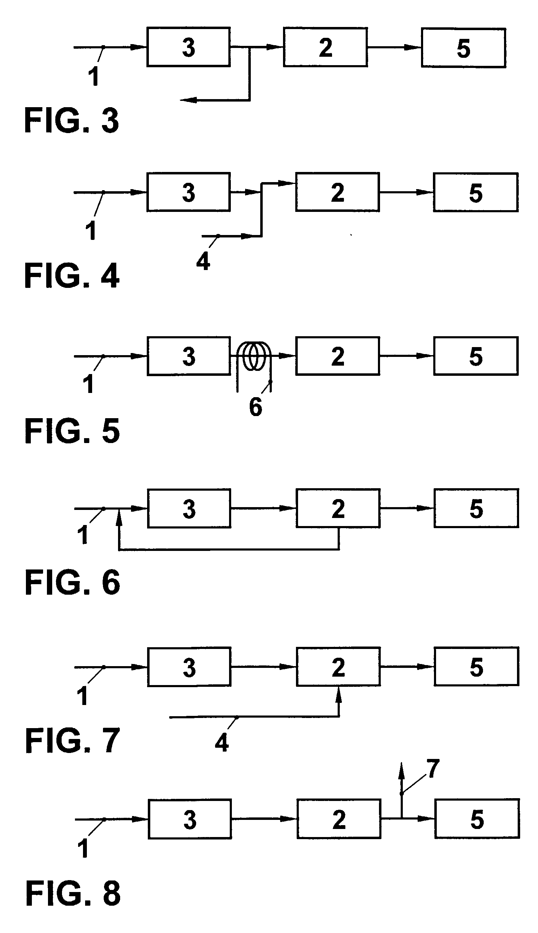

In den Fig. 3 bis 8 sind schematisch mehrere Ausführungsbespiele der Erfindung anhand von verschiedenen Schaltungen des Kühlmediums bzw. des Verbrennungsgases in einem Rostsystem dargestellt, aus denen die verschiedenen Möglichkeiten der Regelbarkeit der Kühlung bzw. Verbrennung gut hervorgehen.

Fig. 3 zeigt eine erste Variante, bei welcher ein Teil der warmen Kühlluft 1 nach dem Durchlaufen der Kühlstrecke 3 abgeführt und aus dem System entfernt wird. Dieser Teil der Kühlluft wird nicht zur Verbrennung des Mülls benötigt und kann z. B. zur Wärmerückgewinnung benutzt werden.

In Fig. 4 ist dagegen dargestellt, dass der Kühlluft 1 nach dem Durchlaufen der Kühlstrecke 3, aber vor dem Eintritt in die Unterwindzone 2, Verbrennungsgas 4 zugemischt wird, dieses Gemisch in die Unterwindzone 2 und anschliessend in den Verbrennungsraum 5 geleitet wird.

Fig. 5 zeigt beispielhaft, dass das Kühlmedium 1 nach dem Durchlaufen der Kühlstrecke 3, aber vor Zufuhr in die Unterwindzone 2, mittels einer Heizeinrichtung 6 zusätzlich vorgewärmt wird. Gleiches ist selbstverständlich auch für die Verbrennungsluft 4 möglich, so dass eine optimale Anpassung der Verbrennungslufftemperatur an die Bedingungen im Feuerraum 5 erreicht werden.

Aus Fig. 6 geht hervor, dass ein Teil des (erwärmten) Kühlmediums 1 aus der Unterwindzone abgeführt wird, und dem (kalten) Kühlmedium 1 vor der Kühlstrecke zugegeben wird.

Fig. 7 verdeutlicht, dass das Kühlmedium 1 nach dem Durchlaufen der Kühlstrecke 3 direkt in die darunterliegende Unterwindzone 2 strömt, in welche zusätzliches Verbrennungsgas 4 zugeführt wird, wobei beide Medien zusammen als eigentliches Verbrennnungsgas 4 danach in den Verbrennungsraum 5 strömen.

Schliesslich zeigt Fig. 8 an einem Beispiel die Entnahme von Sekundärluft 7, die dem System in einer Nachbrennkammer zugeführt wird, um einen vollständigen Ausbrand zu erreichen. Die Sekundärluft 7 wird dem Verbrennungsgas 4 vor dem Eintritt in den Verbrennungsraum 5 entnommen.

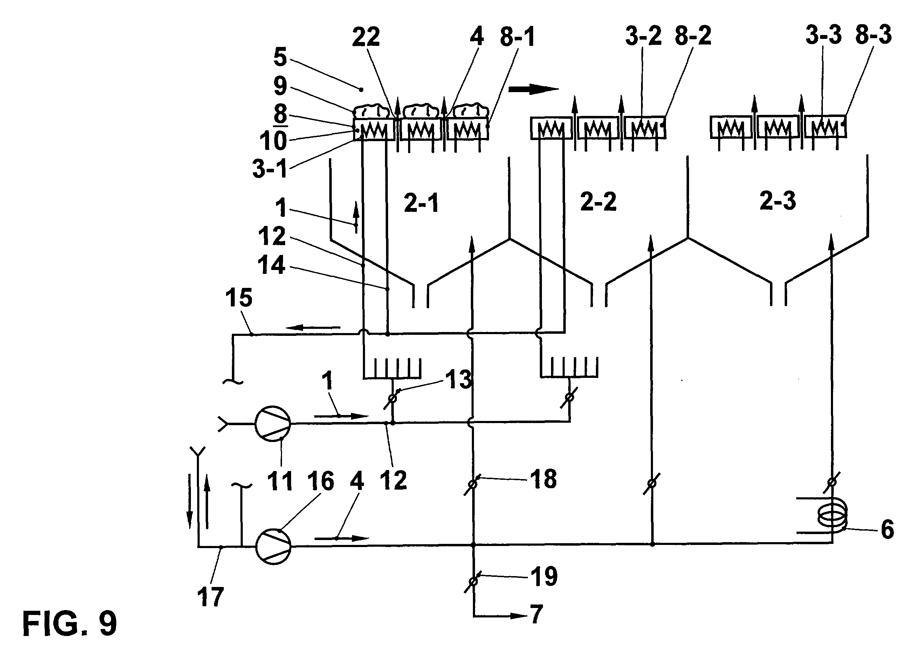

Fig. 9 zeigt schematisch eine mögliche Ausführungsform für die Realisierung des Kühlluft/Verbrennungsluftweges gemäss Fig. 4. Es ist ein Teil eines Müllverbrennungsofens dargestellt, in dessen unterem Bereich (in der Zeichnung oben) sich ein Verbrennungsrost 8 befindet, oberhalb dessen sich ein Verbrennungsraum 5 erstreckt. Der Verbrennungsrost 8 besteht im wesentlichen aus in Reihen angeordneten Rostbelageinheiten 10. Diese Rostbelageinheiten 10 können z. B. Roststäbe oder Rostplatten sein, von denen in einer Reihe mehrere nebeneinander angeordnet sind. Im Extremfalle kann sich eine Rostplatte auch über die ganze Breite des Rostes bzw. einer Rostbahn erstrecken. Der Verbrennungsrost 8 ist in Müllflussrichtung in mehrere Zonen unterteilt. Im Beispielsfalle sind 3 Zonen 8-1, 8-2, 8-3 abgebildet. Auf den Verbrennungsrost 8 wird der zu verbrennende Müll 9 aufgegeben, der auf Grund der Bewegung der Roststabreihen auf dem Rost bewegt wird. Die Müllflussrichtung ist mit einem Pfeil angegeben. Die Rostbelageinheiten 10 weisen in ihrem Inneren jeweils eine Kühlstrecke 3 auf, durch welche zum Zwecke der Kühlung gasförmiges Kühlmedium 1, vorzugsweise Kühlluft, hindurchströmt. Unterhalb der Rostzonen 8-1, 8-2 und 8-3 sind jeweils Unterwindzonen 2-1, 2-2 und 2-3 vorgesehen. Im unteren Teil von Fig. 9 ist das System der Kühlluft- und Verbrennungsluftverteilung dargestellt und soll im folgenden näher beschrieben werden.

Die Kühlluft 1 wird mit einem Gebläse 11 angesaugt. Sie strömt über eine Kühlluftzufuhrleitung 12 mit entsprechenden Abzweigungen zu den einzelnen Zonen des Verbrennungsrostes 8, wobei diese Zonen parallelgeschaltet sind. Die jeweils benötigte Kühlluftmenge in einer Zone wird mittels unterschiedlicher Öffnung der Klappen 13 geregelt. Die Kühlluft 1 strömt nun durch die Kühlstrecken 3-1, 3-2 und 3-3 in den Rostbelageinheiten 10 der jeweiligen Rostzonen 8-1, 8-2 und 8-3 und wird anschliessend, also nach der Kühlung, über Leitungen 14, z. B. Schläuche, von den Roststäben 10 abgeführt. Aus Gründen einer besseren Übersichtlichkeit ist in der Fig. 9 nur eine Leitung 14 im linken Teil der Zeichnung dargestellt. Die Leitungen 14 münden in eine Rückfuhrleitung 15.

Gleichzeitig wird über ein Verbrennungsluftgebläse 16 Verbrennungsluft 4 angesaugt. Da die Rückfuhrleitung 15 für die erwärmte Kühlluft in die Verbrennungsluftzufuhrleitung 17 mündet, werden die angesaugte Verbrennungsluft und die erwärmte Kühlluft miteinander vermischt und bilden die eigentliche Verbrennungsluft 4. Diese strömt über Abzweigungen in der Leitung 17 in die einzelne Unterwindzonen 2-1, 2-2 und 2-3, wobei die jeweilige Menge der benötigten Verbrennungsluft 4 in den einzelnen Zonen wiederum geregelt wird, und zwar mittels der Klappen 18. Von den Unterwindzonen 2 aus strömt nun die Verbrennungsluft 4 über Schlitze/Öffnungen 22 im Rostbelag 10 ohne nennenswerte Kühlwirkung in die darüberliegende jeweilige Zone des Verbrennungsraumes 5.

Es findet also eine Entkopplung des Mengenstromes des gasförmigen Kühlmediums 1 einer Rostzone 8-1, 8-2... vom Mengenstrom des Verbrennungsgases 4 genau dieser Zone statt.

In Fig. 9 ist rechts unten angedeutet, dass die Verbrennungsluft 4 einer Zone selbstverständlich problemlos zusätzlich mittels einer Heizvorrichtung 6 erwärmt werden kann, wenn dies für eine Optimierung des Prozesse notwendig sein sollte. Da Kühlung und Verbrennung entkoppelt sind, wird dadurch die Kühlwirkung nicht beeinflusst.

Ausserdem ist in Fig. 9 gezeigt, dass aus der Leitung 17 auch Sekundärluft entnommen werden kann, deren Menge mittels einer Klappe 19 geregelt wird.

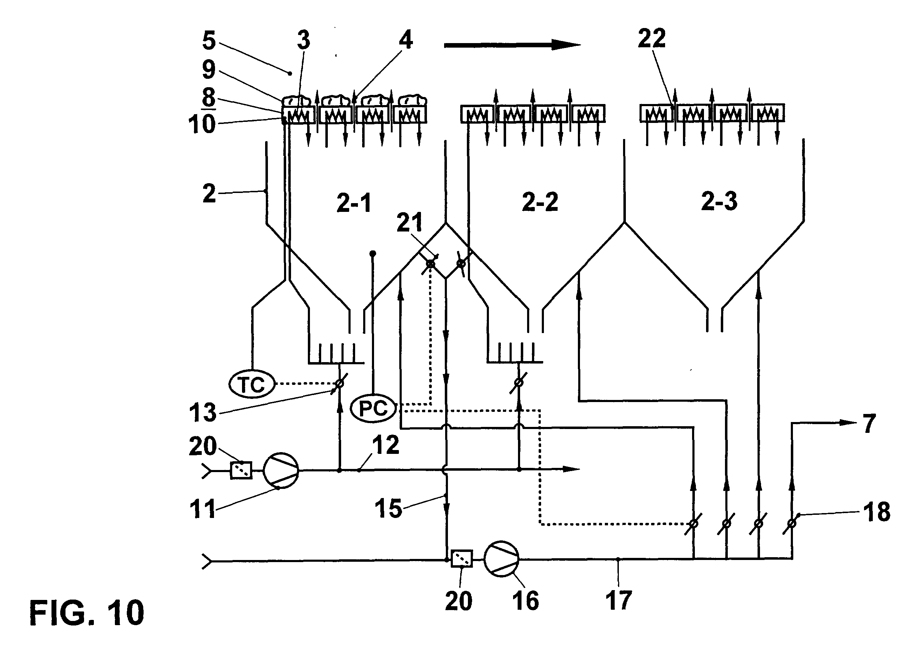

In Fig. 10 ist eine weitere Ausführungsvariante der Erfindung dargestellt. Sie unterscheidet sich von der Ausführungsvariante gemäss Fig. 9 hauptsächlich dadurch, dass die Kühlluft 1 nach Durchströmen der Kühlstrecken 3 in den Roststäben 10 nicht über Leitungen 14 weggeführt wird, sondern hier wird die erwärmte Kühlluft sofort in die entsprechende Unterwindzone 2 geleitet. Die Kühlluft sollte einen Druck p von mindestens Atmosphärendruck bis max. 2 bar Überdruck aufweisen. Durch den Überdruck der Kühlluft 1 wird gewährleistet, dass aus dem Verbrennungsraum 5 kein Rauchgas durchdrückt. Bei dieser Ausführungsvariante ist gegenüber der in Fig. 9 gezeigten Variante der konstruktive und verfahrenstechnische Aufwand wesentlich kleiner, weil viele Leitungen eingespart werden können. Damit Kühlluft 1 und Verbrennungsluft 4 möglichst sauber sind, ist stromauf der Gebläse 11 bzw. 16 jeweils die Anordnung eines Luftfilters 20 vorgesehen.

Ausserdem ist in der Fig. 10 dargestellt, wie mittels Temperatur- und Druckmessung die Menge des der Unterwindzone 2 zu- bzw. abgeführten Kühlmediums 1 geregelt werden kann

Ein Temperturkontrollsystem TC misst die Temperatur im Rostbelag 10. Die entsprechenden Signale werden zur Klappe 13 geleitet, welche in Abhängigkeit von der jeweiligen Temperaturhöhe die Menge der zuzuführenden Kühlluft 1 regelt, d. h. bei einem hohen Temperaturwert wird sich die Klappe 13 weiter öffnen, so dass mehr Kühlluft 1 zur entsprechenden Kühlstrecke 3 geleitet wird als bei einer niedrigeren Temperatur. Auf diese Weise wird eine grössere Kühlwirkung für den heisseren Bereich erreicht, d. h. die Kühlung kann optimiert werden. Grundsätzlich sollte die Menge des gasförmigen Kühlmediums 1 zu den einzelnen Rostzonen so geregelt werden, dass die Austrittstemperatur Tₐ des Kühlmediums nach dem Durchlaufen der Kühlstrecke 3 weniger als +/- 100 °C von der mittleren Temperatur Tₘ aller Kühlluftstrecken 3 abweicht.

Mit Hilfe des Druckkontrollsystems PC wird einerseits in der Unterwindzone 2 der Druck p der Luft gemessen. Andererseits steht das Druckkontrollsystem PC mit den Klappen 18 für die Verbrennungsluftmengenzufuhr und Klappen 21 für die Rückführung de Kühlluft 1 aus der Unterwindzone 2 in Verbindung. Sollte also z. B. der Verbrennungsluftdruck p in der Unterwindzone 2 nicht ausreichend sein, so gehen entsprechende Signale zu den Klappen 21 und 18. Die Klappe 18 wird dann weiter geöffnet, so dass mehr Verbrennungsluft in die Unterwindzone 2 gelangt, während die Klappe 21 geschlossen wird, so dass keine bzw. nur weniger Luft aus der Unterwindzone abgeführt wird. Wird weniger Verbrennungsluft 4 im Verbrennungsraum 5 benötigt, sind die Verhältnisse umgekehrt.

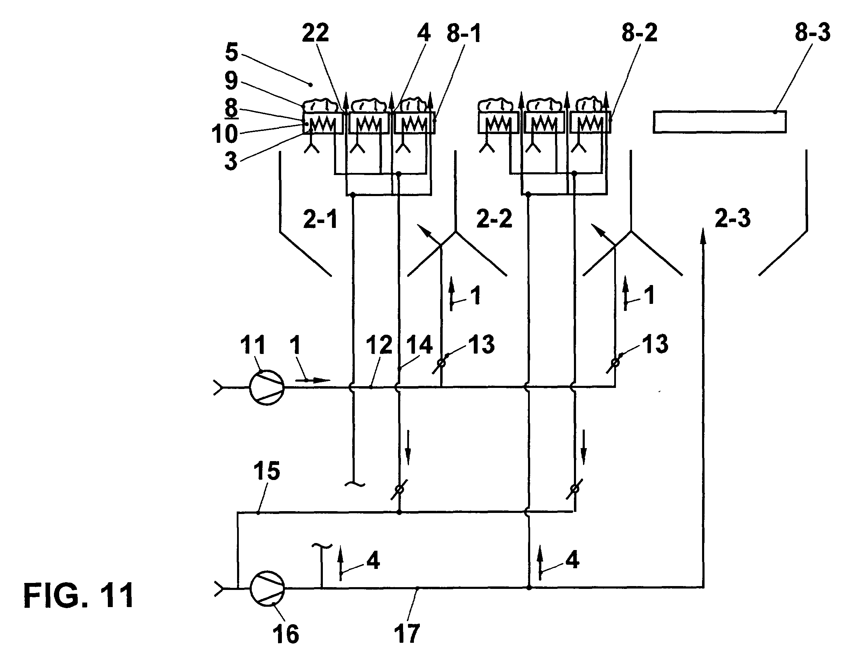

Fig. 11 zeigt eine weitere mögliche Ausführungsvariante der Erfindung, und zwar für die Realisierung des Kühlluft/Verbrennungsluft-Weges gemäss Fig. 2b. Dabei wird gasförmiges Kühlmedium 1, z. B. Luft, über ein Gebläse 11 angesaugt und über eine Leitung 12 direkt einer Unterwindzone 2 zugeführt. Die Kühlluft 1 strömt dann aus der Unterwindzone 2 in die Kühlstrecke 3 und kühlt dabei den Rostbelag 10 des Verbrennungsrostes 8. An die Kühlstrecke 3 ist eine Leitung 14 angeschlossen, über welche die ehemalige Kühlluft 1 einer Leitung 15 zugeführt wird, in welche auch die anderen Leitungen 14 von den verschiedenen Kühlluftzonen des Verbrennungsrostes münden. Die Leitung 15 mündet ihrerseits in eine Verbrennungsluftleitung 17, in welcher Verbrennungsluft 1 entlangströmt, welche mittels eines Gebläses 16 aus der Umgebung angesaugt wird. Abgezweigte Leitungen aus der Leitung 17 führen zu Öffnungen 22, welche in bzw. zwischen den Rostbelageinheiten 10 vorhanden sind, so dass durch diese Öffnungen 22 das Verbrennungsgas 4 in den Verbrennungsraum 5 strömt, ohne den Rostbelag 10 noch wesentlich zu kühlen. Auch bei dieser Variante wird somit eine Entkopplung des Mengenstromes des gasförmigen Kühlmediums 1 einer Rostzone vom Mengenstrom des Verbrennnungsgases 4 genau dieser Zone durchgeführt, wobei in mindestens einer der Zonen des Verbrennungsrostes 8 ein grösserer Mengenstrom des Kühlmediums 1 eingebracht wird als der Mengenstrom des Verbrennungsgases 4 genau dieser Zone.

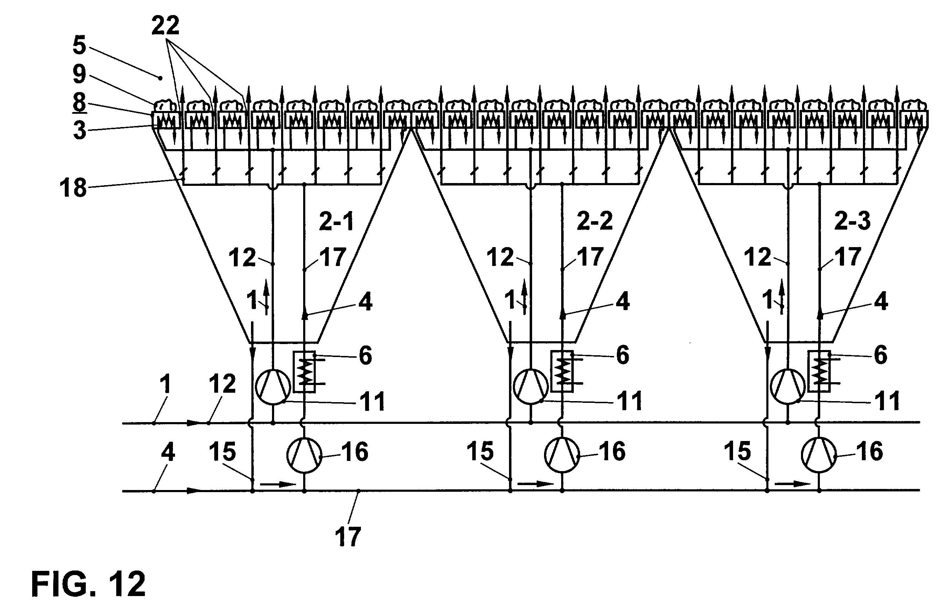

Durch die Entkopplung von Kühlluft und Verbrennungsluft ergeben sich eine ganze Reihe von Eingriffsmöglichkeiten zur Optimierung von Kühlung und Verbennung. Abschliessend soll in Fig. 12 ein letztes Ausführungsbeispiel gezeigt werden, bei welchem einen Zwangskühlung mit modularisierten Zonen und eine individuelle Verbrennungsluftzufuhr pro Reihe des Rostes vorgesehen sind. Kühluft 1 wird in eine Kühlluftleitung 12 angesaugt, von welcher jeweils eine Abzweigung zu jeder Rostzone vorgesehen ist, in der jeweils ein Kühlluftgebläse 11 angeordnet ist, über das sich die Menge derjeweils zugeführten Kühlluft regeln lässt. Die in Modulen (in Fig. 12 sind bespielsweise 8 Module pro Zone vorhanden) eingeteilten Zonen 8-1, 8-2, 8-3 des Verbrennunugsrostes 8 werden nun parallel von Kühlluft 1 durchströmt. Nach dem Durchlaufen der Kühlstrecke, z. B. der 8 Teilstrecken von 3-1, strömt das Kühlmedium 1 direkt in die darunterliegende Unterwindzone 2-1. Von dort aus wird es über eine Leitung 15 einer Verbrennungsgaszufuhrleitung 17 zugeführt, deren Abzweigungen wiederum zu Öffnungen 22 in bzw. zwischen den Rostbelageinheiten 10 führen. Durch die Öffnungen 22 strömt dann die Verbrennungsluft 4 in den Verbrennungsraum 5 ein. In jeder der Abzweigungen der Zufuhrleitungen 17 zu den Öffnungen 22 sind Klappen 18 angeordnet. Durch Betätigung die Klappen 18 wird eine individuelle Dosierung der Verbrennungsluftzufuhr ermöglicht. Auch bei diesem Ausführungsbeispiel ist eine vorgängige Erwärmung der Verbrennungsluft 4 mittels einer Heizeinrichtung 6 vorgesehen.

### Bezugszeichenliste

- 1: Gasförmiges Kühlmedium, z. B. Luft
- 2: Unterwindzone
- 3: Kühlstrecke
- 4: Verbrennungsluft (Primärluft)
- 5: Verbrennungsraum
- 6: Heizeinrichtung
- 7: Sekundärluft
- 8: Verbrennungsrost
- 9: Abfall, Müll
- 10: Roststab, Rostbelag
- 11: Kühlluftgebläse
- 12: Kühlluftzufuhrleitung
- 13: Klappen für Kühlluftmengenregelung
- 14: Leitungen für erwärmte Kühlluft
- 15: Rückfuhrleitung
- 16: Verbrennungsluftgebläse
- 17: Verbrennungsluftzufuhrleitung
- 18: Klappe für Primärluftmengenregelung
- 19: Klappe für Sekundärluftmengenregelung
- 20: Luftfilter
- 21: Klappe in Leitung 15
- 22: Öffnungen in/zwischen Pos. 10
- Tₐ: Austrittstemperatur des Kühlmediums
- Tₘ: mittlere Temperatur aller Kühlluftstrecken
- p: Druck
- TC: Temperaturkontrollsystem
- PC: Druckkontrollsystem

## Patentansprüche

1. Verfahren zur Verbrennung von Feststoffen, insbesondere Abfall (9), auf einem in mehrere Zonen (8-1, 8-2...) unterteilten, im wesentlichen aus in Reihen angeordneten Rostbelageinheiten (10) bestehenden Verbrennungsrost (8), wobei ein Verbrennungsgas (4) unterhalb der Zonen (8-1, 8-2 ...) bereitgestellt und anschliessend durch Öffnungen (22) in/zwischen den Rostbelageinheiten (10) in einen darüberliegenden Verbrennungsraum (5) geführt wird, und wobei zumindestens ein Teil der Rostbelageinheiten (10) mittels eines gasförmigen Kühlmediums (1), welches eine Kühlstrecke (3-1, 3-2...) durchströmt, zwangsgekühlt werden, dadurch gekennzeichnet, dass eine Entkopplung des Mengenstroms des gasförmigen Kühlmediums (1) einer Rostzone (8-1, 8-2...) vom Mengenstrom des Verbrennungsgases (4) genau dieser Zone (8-1, 8-2...) durchgeführt wird.

2. Verfahren nach Anspruch 1, dadurch gekennzeichnet, dass in mindestens einer der Zonen (8-1, 8-2...) des Verbrennungsrostes (8) ein grösserer Mengenstrom des Kühlmediums (1) eingebracht wird als der Mengenstrom des Verbrennungsgases (4) genau dieser Zone (8-1, 8-2...).

3. Verfahren nach Anspruch 1, dadurch gekennzeichnet, dass das Kühlmedium (1) über eine Leitung (12) direkt der Kühlstrecke (3) zugeführt wird, nach Durchlaufen der Kühlstrecke (3) zunächst über Leitungen (14, 15) einer Verbrennungsgaszufuhrleitung (17) zugeführt wird, anschliessend das Gemisch beider Medien in eine Unterwindzone (2) strömt und und von dort aus als eigentliches Verbrennungsgas (4) in den Verbrennungsraum (5) strömt.

4. Verfahren nach Anspruch 1, dadurch gekennzeichnet, dass das Kühlmedium (1) über eine Leitung (12) der Kühlstrecke (3) zugeführt wird, nach Durchlaufen der Kühlstrecke (3) direkt in eine darunterliegende Unterwindzone (2) eingebracht wird, und die Menge des für diese Zone benötigten Verbrennungsgases (4) durch Zufuhr von zusätzlichem Verbrennungsgas (4) in die Unterwindzone (2) oder durch Abfuhr von gasförmigem Medium aus der Unterwindzone (2) eingestellt wird.

5. Verfahren nach Anspruch 1, dadurch gekennzeichnet, dass das Kühlmedium (1) über eine Leitung (12) direkt einer Unterwindzone (2) zugeführt wird, aus der Unterwindzone (2) heraus der Kühlstrecke (3) zugeführt wird, nach Durchlaufen der Kühlstrecke (3) zunächst über Leitungen (14, 15) einer Verbrennungsgaszufuhrleitung (17) zugeführt wird, deren Abzweigungen zu den Öffnungen (22) in/zwischen den Rostbelageinheiten (10) führen, durch welche das Gemisch beider Medien als eigentliches Verbrennungsgas (4) in den Verbrennungsraum (5) eingebracht wird.

6. Verfahren nach Anspruch 1, dadurch gekennzeichnet, dass das Kühlmedium (1) über eine Leitung (12) der Kühlstrecke (3) zugeführt wird, nach Durchlaufen der Kühlstrecke (3) direkt in eine darunterliegende Unterwindzone (2) strömt, aus der Unterwindzone (2) über eine Leitung (15) einer Verbrennungsgaszufuhrleitung (17) zugeführt wird, deren Abzweigungen zu den Öffnungen (22) in/zwischen den Rostbelageinheiten (10) führen, durch welche das Gemisch beider Medien als eigentliches Verbrennungsgas (4) in den Verbrennungsraum (5) eingebracht wird.

7. Verfahren nach einem der Ansprüche 1 bis 6, dadurch gekennzeichnet, dass das Verbrennungsgases (4) für jede Reihe des Verbrennungsrostes (8) individuell dosiert zugeführt wird.

8. Verfahren nach einem der Ansprüche 1 bis 7, dadurch gekennzeichnet, dass die Menge des gasförmigen Kühlmediums (1), welches den Kühlstrecken (3-1, 3-2...) der jeweiligen Rostzonen (8-1, 8-2...) zugeführt wird, so geregelt wird, dass die Austrittstemperatur (Tₐ) des Kühlmediums (1) nach Durchlaufen der Kühlstrecke (3-1, 3-2...) weniger als +/- 100°C von der mittleren Temperatur (Tₘ) aller Kühlluftstrecken (3) abweicht.

9. Verfahren nach einem der Ansprüche 1 bis 8, dadurch gekennzeichnet, dass als Kühlmedium (1) Luft verwendet wird mit einem Druck (p) von mindestens Athmosphärendruck bis max. 2 bar Überdruck.

10. Verfahren nach einem der Ansprüche 1 bis 9, dadurch gekennzeichnet, dass mindestens ein Teil des Kühlmediums (1) unmittelbar nach Durchlaufen der Kühlstrecke (3) abgeführt, aus dem System entfernt und gegebenenfalls zur Wärmrückgewinnung genutzt wird.

11. Verfahren nach einem der Ansprüche 1 bis 10, dadurch gekennzeichnet, dass der Kühlluft (1) nach dem Durchlaufen der Kühlstrecke (3), aber vor dem Eintritt in die Unterwindzone (2), Verbrennungsgas (4) zugemischt wird, dieses Gemisch in die Unterwindzone (2) und anschliessend in den Verbrennungsraum (5) geleitet wird.

12. Verfahren nach einem der Ansprüche 1 bis 11, dadurch gekennzeichnet, dass ein Teil des Kühlmediums (1) aus der Unterwindzone (2) abgeführt und dem Kühlmedium (1) vor der Kühlstrecke (3) zurückgeführt wird.

13. Verfahren nach einem der Ansprüche 1 bis 12, dadurch gekennzeichnet, dass das Verbrennungsgas (4) vor Zufuhr zu mindestens einem Teil der Unterwindzonen (2) bzw. vor Eintritt in den Verbrennungsraum (5) vorgewärmt wird.

14. Verfahren nach einem der Ansprüche 1 bis 13, dadurch gekennzeichnet, dass dem Verbrennungsgas (4) vor Eintritt in den Verbrennungsraum (5) Sekundärluft (7) entnommen wird.
